# EUROPÄISCHE PATENTSCHRIFT

(11) **EP 2 056 207 B1**
(45) Veröffentlichungstag und Bekanntmachung des Hinweises auf die Patenterteilung: **05.09.2012**
(21) Anmeldenummer: 08018398.1
(22) Anmeldetag: 21.10.2008
(51) Int. Cl.: G06F 13/38, G06F 21/00

(54) **Datenübertragung großer Datenmengen**
Data transmission of large volumes of data
Transmission de grandes quantités de données

(30) Priorität: 26.10.2007 DE 102007051372
(43) Veröffentlichungstag der Anmeldung: 06.05.2009
(73) Patentinhaber: Giesecke & Devrient GmbH, 81677 München (DE)
(72) Erfinder: Stocker, Thomas, 81739 München (DE); Baldischweiler, Michael, 81825 München (DE); Kramposthuber, Georg, 80805 München (DE)

(56) Entgegenhaltungen:
- EP-A- 1 100 045
- WO-A-02/31762
- CN-A- 1 936 934
- US-A1- 2007 194 134
- US-A1- 2007 243 901

## Beschreibung

Die vorliegende Erfindung betrifft ein Verfahren zur Datenübertragung, insbesondere zur Übertragung großer Datenmengen zwischen einem portablen Datenträger und einer Datenverarbeitungseinrichtung sowie einen entsprechenden Datenträger und eine entsprechende Datenverarbeitungseinrichtung.

Aktuelle portable Datenträger, beispielsweise SIM- oder USIM-Mobilfunkkarten oder Chipkarten für den Zahlungsverkehr, unterstützen in der Regel mehrere Schnittstellen zur Datenkommunikation mit einer Datenverarbeitungseinrichtung. Dabei gibt es Schnittstellen zur kontaktlosen und zur kontaktbehafteten Datenkommunikation. Datenverarbeitungseinrichtungen sind beispielsweise Kontaktlos-Lesegeräte, z.B. für Zahlungsanwendungen im öffentlichen Personennahverkehr, gewöhnliche Chipkartenterminals oder Telekommunikationsendgeräte.

Im Rahmen der vorliegenden Erfindung wird unter einer Schnittstelle immer eine kontaktbehaftete physikalische Schnittstelle und ein diese physikalische Schnittstelle unterstützendes Kommunikationsprotokoll verstanden. Dabei ist es möglich, dass zwei unterschiedliche Komnunikationsprotokolle, beispielsweise das USB-Protokoll und das T=0 Protokoll, dieselbe physikalische Schnittstelle, z.B. ein Kontaktfeld gemäß ISO/IEC 7816, unterstützen. Insofern werden nachfolgend die USB-Schnittstelle und die T=0 Schnittstelle als zwei unterschiedliche Schnittstellen angesehen, auch wenn die jeweiligen Protokolle über dieselbe physikalische Schnittstelle operieren. Weitere bekannte Kontakt-Schnittstellen, über die ein Datenträger mit einer Datenverarbeitungseinrichtung kommunizieren kann, nutzen z.B. das T=1 Protokoll oder das Single-Wire-Protokoll (SWP), welches aktuell einen Standardisierungsprozess durchläuft (ETSI TS XXX YYY V0.8.1, 2007-07).

Verschiedene Schnittstellen bieten in der Regel unterschiedliche Datenübertragungsraten zwischen dem Datenträger und der Datenverarbeitungseinrichtung. Die Datenübertragungsraten hängen dabei unter anderem von dem jeweiligen Kommunikationsprotokoll und der Taktfrequenz des Datenträgers ab. Es gibt Anwendungen, bei denen innerhalb kurzer Zeit große Datenmengen von der Datenverarbeitungseinrichtung zur Bearbeitung an den Datenträger gesendet und nach der Bearbeitung durch den Datenträger an die Datenverarbeitungseinrichtung zurückgesendet werden müssen. Eine solche Anwendung ist z.B. das Empfangen und Anzeigen von Daten für digitales Fernsehen auf einem Telekommunikationsendgerät (DVB-H, "Digital Video Broadcasting - Handhelds" gemäß ETSI EN 302 304 V1.1.1). Dabei entschlüsselt ein in das Endgerät eingesetzter Datenträger die von dem Endgerät über Funksignale empfangenen und an den Datenträger gesendeten Fernsehdaten und sendet diese an das Endgerät zurück, wo sie einem Nutzer auf einem Display im Fernsehformat angezeigt werden.

Im Falle großer Datenmengen, wie sie im Zusammenhang mit DVB-H üblicherweise auftreten, ist die Datenübertragungsrate von Schnittstellen oftmals zu gering, um bereits bearbeitete, also empfangene und entschlüsselte Daten an das Telekommunikationsendgerät zurückzusenden und gleichzeitig weiterhin noch nicht empfangene Daten von dem Endgerät zu empfangen. Dies ist jedoch notwendig, um die Fernsehbilder nahezu in Echtzeit auf dem Telekommunikationsendgerät zur Anzeige zu bringen.

Die DE 103 12 663 A1 beschreibt eine Kommunikationsvorrichtung mit einer flächigen Anzeigeeinrichtung, welche in einer Baueinheit zusätzlich eine oder mehrere Schnittstelleneinrichtungen zur Unterstützung einer oder mehrerer Schnittstellen zur Datenübertragung mittels magnetischer oder elektromagnetischer Signale umfasst. Das Problem begrenzter Datenübertragungsraten von Schnittstellen bei der Bearbeitung großer Datenmengen ist in der DE 10312 663 A1 nicht angesprochen.

Es ist demnach die Aufgabe der vorliegenden Erfindung, ein Verfahren zum Empfangen von großen Datenmengen durch einen portablen Datenträger und ein möglichst effizientes Zurücksenden der Daten bereitzustellen.

Diese Aufgabe wird durch ein Verfahren, einen Datenträger und eine Datenverarbeitungseinrichtung mit den Merkmalen der unabhängigen Ansprüche gelöst. Vorteilhafte Ausgestaltungen und Weiterbildungen sind in den abhängigen Ansprüchen angegeben.

Die Erfindung basiert auf dem Grundgedanken, wonach eine Datenkommunikation zwischen einem portablen Datenträger und einer Datenverarbeitungseinrichtung über zumindest zwei Schnittstellen des Datenträgers durchgeführt wird.

Demnach werden bei einem Verfahren in einem portablen Datenträger Daten von einer Datenverarbeitungseinrichtung empfangen, die empfangenen Daten bearbeitet und die bearbeiteten Daten an die Datenverarbeitungseinrichtung zurückgesendet. Die US 2007/0194134 A1 beschreibt ein Solches Verfahren, wobei der Akzeut bei der Prioritisierung der Schnittstellen liegt. Erfindungsgemäß werden die Daten über zumindest zwei Empfangsschnittstellen des Datenträgers empfangen und/oder die bearbeiteten Daten werden über zumindest zwei Sendeschnittstellen des Datenträgers zurückgesendet und/oder die Daten werden über zumindest eine Empfangsschnittstelle des Datenträgers empfangen und die bearbeiteten Daten werden über zumindest eine von der zumindest einen Empfangsschnittstelle verschiedene Sendeschnittstelle des Datenträgers zurückgesendet.

Der erfindungsgemäße Datenträger umfasst demnach zumindest zwei Schnittstellen zur Datenkommunikation mit der Datenverarbeitungseinrichtung sowie eine Kommunikationseinrichtung, die eingerichtet ist, Daten von der Datenverarbeitungseinrichtung zu empfangen, die empfangenen Daten zu bearbeiten und die bearbeiteten Daten an die Datenverarbeitungseinrichtung zurückzusenden. Dabei ist die Kommunikationseinrichtung eingerichtet, Daten über zumindest zwei Empfangsschnittstellen des Datenträgers zu empfangen und/oder die bearbeiteten Daten über zumindest zwei Sendeschnittstellen des Datenträgers zurückzusenden und/oder Daten über zumindest eine Empfangsschnittstelle zu empfangen und die bearbeiteten Daten über zumindest eine von der zumindest einen Empfangsschnittstelle verschiedene Sendeschnittstelle zurückzusenden.

Entsprechend umfasst eine erfindungsgemäße Datenverarbeitungseinrichtung eine Leseeinrichtung zum Aufnehmen eines vorstehend beschriebenen Datenträgers, wobei die Leseeinrichtung zumindest zwei Schnittstellen des Datenträgers unterstützt. Des Weiteren umfasst die Datenverarbeitungseinrichtung eine Steuereinrichtung, die eingerichtet ist, Daten an den Datenträger zu senden und die von dem Datenträger bearbeiteten Daten wieder von dem Datenträger entgegenzunehmen. Die Steuereinrichtung ist insbesondere eingerichtet, Daten über zumindest zwei Empfangsschnittstellen des Datenträgers an den Datenträger zu senden und/oder die bearbeiteten Daten über zumindest zwei Sendeschnittstellen des Datenträgers wieder entgegenzunehmen und/oder Daten über zumindest eine Empfangsschnittstelle des Datenträgers an den Datenträger zu senden und die bearbeiteten Daten über zumindest eine von der zumindest einen Empfangsschnittstelle verschiedene Sendeschnittstelle des Datenträgers wieder entgegenzunehmen.

Auf diese Weise ist es möglich, die für die gesamte Datenübertragung zwischen dem Datenträger und der Datenverarbeitungseinrichtung zur Verfügung stehende Datenübertragungsrate, also die Datenübertragungsrate, die für das Empfangen der Daten und das Zurücksenden der bearbeiteten Daten bereitsteht, erheblich zu erhöhen, indem mehrere Schnittstellen zum Empfangen der Daten und/oder zum Zurücksenden der bearbeiteten Daten eingesetzt werden. Die von den jeweiligen Schnittstellen bereitgestellte Datenüberragungsrate kann dabei im Wesentlichen addiert werden und ergibt die zur Verfügung stehende Gesamtdatenübertragungsrate.

Je nach Anwendung können also Daten über zumindest zwei Empfangsschnittstellen des Datenträgers vorzugsweise gleichzeitig empfangen werden, wenn es z.B. erforderlich ist, eine große Datenmenge in kurzer Zeit zu empfangen. Haben die bearbeiteten Daten ein kleineres Volumen als die empfangenen Daten, so können die bearbeiteten Daten über nur eine Sendeschnittstelle zurückgesendet werden. Diese kann eventuell sogar mit einer der Empfangsschnittstellen übereinstimmen, d.h. die entsprechende Schnittstelle dient dann sowohl als Empfangsschnittstelle als auch als Sendeschnittstelle.

Im umgekehrten Fall, wenn also das Volumen der bearbeiteten Daten dasjenige der empfangenen Daten übersteigt, ist es gleichfalls möglich, dass die bearbeiteten Daten über zumindest zwei Sendeschnittstellen vorzugsweise gleichzeitig an die Datenverarbeitungseinrichtung zurückgesendet werden, wobei zum Empfangen der Daten nur eine Empfangsschnittstelle verwendet wird. Diese kann wiederum, muss aber nicht, mit einer der Sendeschnittstellen übereinstimmen.

In dem Fall, in dem sowohl das Volumen der zu empfangenden Daten als auch das der bearbeiteten Daten hoch ist, ist es möglich, dass sowohl zum Empfangen der Daten also auch zum Zurücksenden der Daten mehrere Empfangsschnittstellen bzw. mehrere Sendeschnittstellen vorzugsweise gleichzeitig eingesetzt werden.

Des Weiteren ist es möglich, eine oder mehrere spezielle Empfangsschnittstellen vorzusehen, die nur zum Empfangen von Daten eingerichtet sind, und auf der anderen Seite eine oder mehrere spezielle, von den speziellen Empfangsschnittstellen verschiedene Sendeschnittstellen vorzusehen, die nur zum Zurücksenden von Daten eingesetzt werden. Auf diese Weise ist es möglich, datenträgerinterne Abläufe zu vereinfachen, da das Empfangen der Daten bzw. das Zurücksenden der bearbeiteten Daten selbstständig von der die jeweilige Schnittstelle steuernden Treibersoftware durchgeführt werden kann. Diese Treibersoftware kann dann vereinfacht werden, da sie jeweils nur noch das Empfangen der Daten bzw. das Zurücksenden der bearbeiteten Daten, nicht jedoch beides, unterstützen muss. Es ist dann möglich, für die jeweiligen Schnittstellen separate Eingangs- bzw. Ausgangsspeicher zum Speichern empfangener Daten bzw. zum Speichern bearbeiteter, zurückzusendender Daten vorzusehen, welche von der jeweiligen Treibersoftware auf einfache Weise, beispielsweise in Form einer FIFO-Warteschlange ("First In First Out") verwaltet werden können.

Ferner kann durch eine ausgezeichnete Übertragungsrichtung eine Schnittstelle beispielsweise für den Empfang von großen Datenmengen optimiert werden. Die Idee ist durch optimierte Vorzugsrichtungen auch die Leistung, bei reduziertem Aufwand gegenüber universeller Optimierung, zu erhöhen.

Das erfindungsgemäße Verfahren ist also geeignet, das Empfangen von Daten und das zeitnahe Zurücksenden der bearbeiteten Daten, insbesondere wenn das jeweilige Datenvolumen groß ist, in flexibler und effektiver Weise zu unterstützen.

Die Daten können beim Bearbeiten von der Kommunikationseinrichtung beispielsweise verschlüsselt oder entschlüsselt werden. Andere Arten der Bearbeitung der empfangenen Daten sind gleichfalls möglich.

Vorzugsweise ist die Kommunikationseinrichtung des Datenträgers eingerichtet, die Daten über zumindest eine Empfangsschnittstelle zu empfangen und gleichzeitig bearbeitete Daten über zumindest eine Sendeschnittstelle zurückzusenden. In komplementärer Weise ist die Steuereinrichtung der Datenverarbeitungseinrichtung eingerichtet, die Daten über zumindest eine Empfangsschnittstelle des Datenträgers an den Datenträger zu senden und gleichzeitig die bearbeiteten Daten von dem Datenträger über zumindest eine Sendeschnittstelle des Datenträgers wieder entgegenzunehmen. Auf diese Weise können Echtzeitanforderungen erfüllt werden, beispielsweise im Zusammenhang mit digitalen Fernsehdaten. Während der Datenträger von der Datenverarbeitungseinrichtung weiterhin Teile der Daten, beispielsweise verschlüsselte Fernsehbilder einer aktuellen Sportübertragung, empfängt, bearbeitet er die bereits empfangenen Daten, indem er sie entschlüsselt, und sendet die entschlüsselten Daten an die Datenverarbeitungseinrichtung zurück, beispielsweise an ein Telekommunikationsendgerät. Dort werden die Daten als Fernsehbilder einem Benutzer angezeigt, während weiterhin von dem Endgerät über Funksignale empfangene verschlüsselte Daten an den Datenträger als zu bearbeitende Daten gesendet werden.

Gemäß einer weiteren Ausführungsform können die Daten in verschiedene Anteile aufgeteilt und danach von der Datenverarbeitungseinrichtung über verschiede Empfangsschnittstellen des Datenträgers an den Datenträger gesendet werden. Es ist z.B. möglich, dass der Datenträger über eine erste Empfangsschnittstelle des Datenträgers einen Datenstrom und über eine zweite Empfangsschnittstelle des Datenträgers den Datenstrom betreffende Steuerdaten empfängt. In analoger Weise ist es möglich, zurückzusendende bearbeitete Daten entsprechend aufzuteilen und über verschiedene Sendeschnittstellen an die Datenverarbeitungseinrichtung zurückzusenden.

In dem Datenträger eignet sich insbesondere eine USB-Schnittstelle als Empfangsschnittstelle und/oder als Sendeschnittstelle. Das gleiche gilt für eine SWP-Schnittstelle. Aber auch eine andere Schnittstelle, z.B. eine T=0 oder T=1 Schnittstelle, kann als Empfangsschnittstelle und/oder Sendeschnittstelle alternativ oder zusätzlich verwendet werden, auch wenn diese im Vergleich zu den beiden vorgenannten eine erheblich geringere Datenübertragungsrate bereitstellt.

Ein erfindungsgemäßes System umfasst eine vorstehend beschriebene Datenverarbeitungseinrichtung und einen durch deren Leseeinrichtung aufgenommenen, vorstehend beschriebenen Datenträger. Die Datenverarbeitungseinrichtung kann insbesondere als Telekommunikationsendgerät ausgebildet sein. Als portabler Datenträger kann eine SIM- oder USIM-Mobilfunkkarte, eine Massenspeicherkarte, z.B. eine SD-Karte oder MultiMedia-Karte, oder dergleichen eingesetzt werden.

Die vorliegende Erfindung wird nachfolgend mit Bezug auf die begleitenden Zeichnungen beispielhaft beschrieben. Darin zeigen:
- Figur 1: eine bevorzugte Ausführungsform eines erfindungsgemäßen Datenträgers;
- Figur 2: ein System, umfassend ein Telekommunikationsendgerät mit einer Leseeinrichtung, welche den Datenträger aus Figur 1 aufnimmt; und
- Figur 3: - schematisch den Datenfluss bei einer bevorzugten Ausführungsform des erfindungsgemäßen Verfahrens.

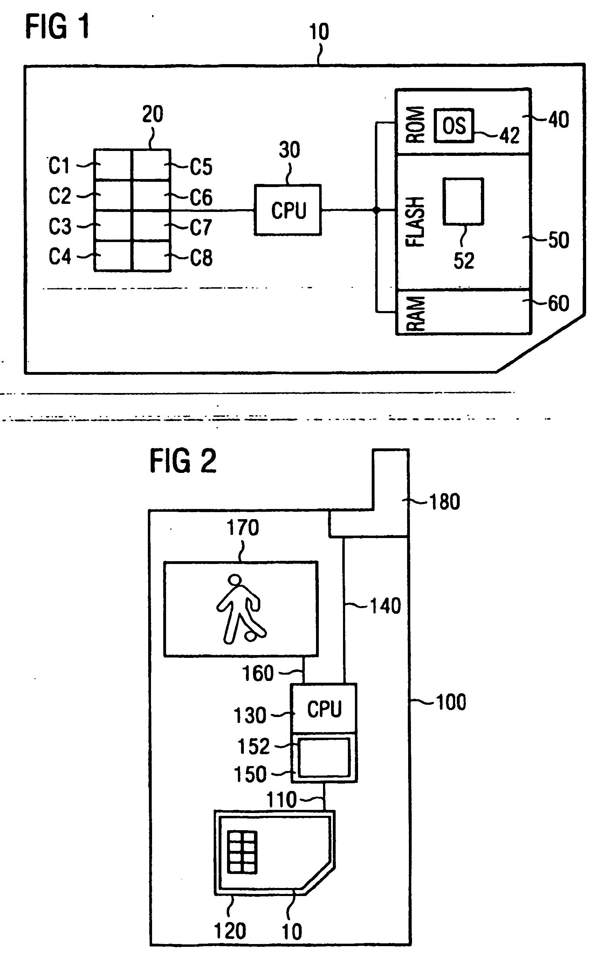

Mit Bezug auf Figur 1 umfasst ein Datenträger 10, der hier als Chipkarte ausgebildet ist, eine kontaktbehaftete physikalische Schnittstelle 20, einen Prozessor (CPU) 30, einen nicht wiederbeschreibbaren, nicht flüchtigen ROM-Speicher 40, einen wiederbeschreibbaren, nicht flüchtigen Flash-Speicher 50 und einen flüchtigen Arbeitsspeicher (RAM) 60. Der Datenträger 10 kann z.B. eine SIM- oder USIM-Mobilfunkkarte, eine Massenspeicherkarte oder dergleichen sein.

Die physikalische Schnittstelle 20 ist als Kontaktfeld gemäß ISO/IEC 7816 ausgebildet und ist eingerichtet, in Kombination mit entsprechend implementierten Kommunikationsprotokollen sowohl eine USB-Schnittstelle als auch eine Single-Wire-Protokoll-Schnittstelle zu unterstützen. Es ist möglich, dass weitere Schnittstellen, beispielsweise eine T=0 oder T=1 Schnittstelle, unterstützt werden. Eine Datenkommunikation verlauft beim T=0 / T=1 Protokoll über den Kontakt C7, beim USB-Protokoll über die Kontakte C4 und C8. Über den Kontakt C6 wird eine Datenkommunikation zwischen der Chipkarte 10 und einem Prozessor 130 einer Datenverarbeitungseinrichtung 100 (Fig.2) gemäß dem Single-Wire-Protokoll (SWP) durchgeführt. Der mit C1 bezeichnete Kontakt dient dem Anlegen einer Betriebsspannung für die Chipkarte 10, die in der Regel über keine eigene Energieversorgung verfügt. Der Kontakt C5 dient als Masseanschluss. Die Kontakte C2 und C3 sind gemäß ISO/ IEC 7816 als Reset-Eingang und zur Taktversorgung für das T=0 / T=1 Protokoll vorgesehen. Die physikalische Schnittstelle 20 kann auch in einer anderen Ausgestaltung vorliegen, beispielsweise als eine Schnittstelle gemäß dem SD-Standard. Es ist auch möglich, dass die Chipkarte 10 verschiedene physikalische Schnittstellen umfasst.

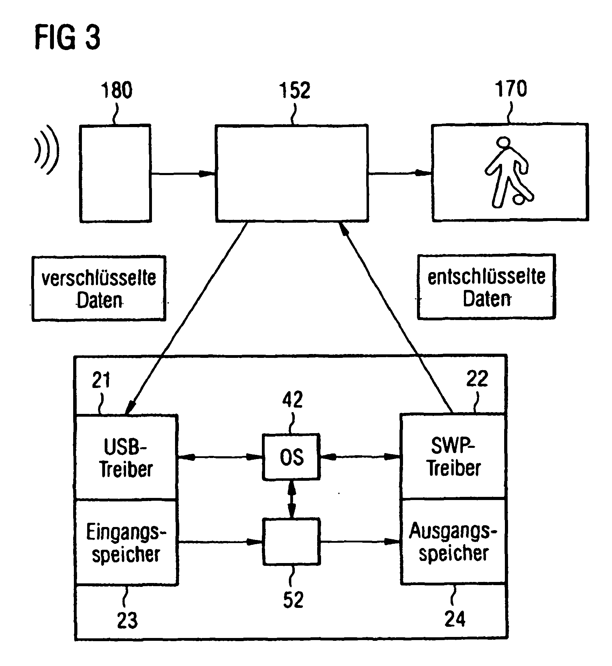

Der Prozessor 30 steuert die Chipkarte 10 mittels des im ROM-Speicher 40 gespeicherten Betriebssystems (OS) 42. Teile des Betriebsystems 42 oder das gesamte Betriebssystem 42 können auch in dem Flash-Speicher 50 gespeichert sein, der ebenso als EEPROM-Speicher oder dergleichen ausgebildet sein kann. Der Speicher 50 dient dem Speichern von Daten und Applikationen. Eine Kommunikationsapplikation 52 dient dem Empfangen von Daten von der Datenverarbeitungseinrichtung 100, dem Bearbeiten der Daten und dem Zurücksenden der bearbeiteten Daten an die Datenverarbeitungseinrichtung 100 über die verschiedenen Schnittstellen der Chipkarte 10. Mit Bezug auf Figur 3 wird die Kommunikationsapplikation 52 genauer beschrieben.

Wie in Figur 2 dargestellt, umfasst eine Datenverarbeitungseinrichtung 100, die hier als Telekommunikationsendgerät ausgebildet ist, eine Leseeinrichtung 120, einen Prozessor (CPU) 130, einen Speicher 150, ein Display 170 und eine Funkschnittstelle 180. Die Erfindung wird im Folgenden mit Bezug auf das Telekommunikationsendgerät 100 beschrieben. Jede geeignet eingerichtete andere Datenverarbeitungseinrichtung ist möglich.

Die Leseeinrichtung 120 ist eingerichtet, wie in Figur 2 gezeigt, die Chipkarte 10 aus Figur 1 aufzunehmen und umfasst dazu eine zu der physikalischen Schnittstelle 20 der Chipkarte 10 komplementäre physikalische Schnittstelle (nicht gezeigt). In dem Fall, in dem die Chipkarte 10 mehrere physikalische Schnittstellen umfasst, ist auch die Leseeinrichtung 120 entsprechend eingerichtet. Des Weiteren unterstützt die Leseeinrichtung 120 alle von der Chipkarte 10 unterstützten Schnittstellen, insbesondere also die USB-Schnittstelle und die SWP-Schnittstelle. Auf diese Weise ist eine Datenkommunikation der Chipkarte 10 über die Leseeinrichtung 120 und die Verbindungsleitung 110 mit dem Prozessor 130 des Telekommunikationsendgeräts 100 möglich. Das Betriebssystem 42 der Chipkarte 10 und das Betriebssystem, welches das Telekommunikationsendgerät 100 steuert, sind jeweils multitaskingfähig ausgebildet, so dass eine parallele Datenkommunikation zwischen Chipkarte 10 und Prozessor 130 über verschiedene Schnittstellen der Chipkarte 10 möglich ist. Dabei steuert eine Steuerapplikation 152 auf Seiten des Telekommunikationsendgeräts 100 die Datenkommunikation mit der Chipkarte 10, indem sie Daten an die Chipkarte 10 sendet und die von der Chipkarte 10 bearbeiteten Daten wieder entgegennimmt. Das Senden und Entgegennehmen kann, wie vorstehend erwähnt, über verschiedene Schnittstellen der Chipkarte 10 und parallel erfolgen. Auch die Steuerapplikation 152 wird mit Bezug auf Figur 3 genauer beschrieben.

Der Prozessor 130 ist weiterhin mit der Funkschnittstelle 180 über eine Verbindungsleitung 140 verbunden. Über die Funkschnittstelle 180 kann eine Datenkommunikation via Mobilfunk durchgeführt werden. Das Display 170 dient dem Anzeigen von Daten, beispielsweise in Form von bewegten Bildern, und wird von dem Prozessor 130 über die Verbindungsleitung 160 gesteuert. Die Energieversorgung des Telekommunikationsendgeräts 100 wie auch der von der Leseeinrichtung 120 aufgenommenen Chipkarte 10 erfolgt in der Regel durch eine Batterie oder einen Akku (nicht gezeigt) des Telekommunikationsendgeräts 100. Vorzugsweise umfasst das Telekommunikationsendgerät 100 weiterhin eine Eingabeeinrichtung, z.B. eine Tastatur, (nicht gezeigt).

Mit Bezug auf Figur 3 wird eine bevorzugte Ausführungsform eines Verfahrens zur Datenkommunikation zwischen der Chipkarte 10 und dem Telekommunikationsendgerät 100 beschrieben.

Über die Funkschnittstelle 180 empfängt das Telekommunikationsendgerät 100 verschlüsselte Daten in Form von Fernsehbildern gemäß dem DVB-H Standard. Im Zusammenhang mit der vorliegenden Erfindung ist jede andere Form von Daten möglich. Die Daten werden an die Steuerapplikation 152 des Telekommunikationsendgeräts 100 weitergeleitet. Um die Fernsehbilder für einen Benutzer des Telekommunikationsendgeräts 100 sichtbar auf dem Display 170 anzuzeigen, müssen die dazugehörigen Daten zuerst bearbeitet werden, d.h. in diesem Fall entschlüsselt oder decodiert werden. Diese Entschlüsselung erfolgt durch die Chipkarte 10.

Die Steuerapplikation 152 sendet die verschlüsselten Daten über die USB-Schnittstelle 21 an die Chipkarte 10. Die Steuerapplikation 152 kann im Prinzip beliebig einfach gehalten werden, z.B. ein Chipkartenadapter, der angeschlossen ist an einem ISO 7816 kompatiblen Terminal in Verbindung mit einer USB-Schnittstelle eines Notebooks. Die USB-Schnittstelle 21 dient der Chipkarte 10 in dieser Ausführungsform als reine Empfangsschnittstelle, d.h. sie ist speziell eingerichtet, selbstständig lediglich Daten von der Steuerapplikation 152 zu empfangen und in einem Eingangsspeicher 23 zu speichern. Die gesamte von der USB-Schnittstelle 21 zur Verfügung gestellte Datenübertragungsrate kann für das Empfangen der verschlüsselten Daten verwendet werden. Die Treiber-Software der USB-Schnittstelle 21, welche die USB-Schnittstelle 21 steuert, kann besonders einfach gehalten werden, da sie im Wesentlichen nur den Eingangsspeicher 23 zu verwalten hat. Des Weiteren ist es dann möglich, den Eingangsspeicher 23 in einfacher Weise, z.B. in Form einer FIFO-Warteschlange, zu verwalten, da stets nur Daten von der Steuerapplikation 152 empfangen und gespeichert werden müssen, die dann von der Kommunikationsapplikation 52 zum Bearbeiten aus dem Eingangsspeicher 23 wieder entnommen werden. Die Kommunikationsapplikation 52 wird über das Vorliegen zu bearbeitender Daten in dem Eingangsspeicher 23 von dem Betriebssystem 42 unterrichtet, welches diese Nachricht seinerseits, beispielsweise durch einen Interrupt, vom USB-Treiber empfängt. Es ist jedoch genauso möglich als Empfangsschnittstelle der Chipkarte 10 eine gewöhnliche USB-Schnittstelle, über die sowohl Daten empfangen als auch gesendet werden können, oder eine andere Schnittstelle zu verwenden.

Die von der Kommunikationsapplikation 52 der Chipkarte 10 aus dem Eingangsspeicher 52 entnommenen verschlüsselten Daten werden von der Kommunikationsapplikation 52 entschlüsselt und dann als bearbeitete, also entschlüsselte Daten in einem Ausgangsspeicher 24 einer SWP-Schnittstelle 22 der Chipkarte 10 gespeichert. Das Bearbeiten der Daten kann allgemein auch anderen Zwecken dienen. Daten können beispielsweise durch die Kommunikationsapplikation 52 oder durch eine von der Kommunikationapplikation gesteuerte weitere Applikation verschlüsselt oder in ein anderes Datenformat konvertiert werden oder dergleichen.

Die SWP-Schnittstelle 22 ist in der beschriebenen Ausführungsform als reine Sendeschnittstelle eingerichtet. Somit kann die gesamte von der SWP-Schnittstelle 22 zur Verfügung gestellte Datenübertragungsrate zum Zurücksenden der entschlüsselten Daten verwendet werden. Die SWP-Schnittstelle 22 umfasst den Ausgangsspeicher 24, in dem von der Kommunikationsapplikation 52, wie erwähnt, bearbeitete Daten gespeichert werden. Der SWP-Treiber ist eingerichtet, diese gespeicherten Daten, sobald sie in dem Ausgangsspeicher 24 vorliegen, selbstständig an die Steuerapplikation 152 des Telekommunikationsendgeräts 100 zurückzusenden. Auch der SWP-Treiber kann somit einfach gehalten werden, da er im Wesentlichen nur den Ausgangsspeicher 24 zu verwalten hat. Der Ausgangsspeicher 24 kann analog zu dem Eingangsspeicher 23 ausgebildet sein. Die Kommunikation zwischen dem SWP-Treiber und dem Betriebssystem 42 verläuft wie gewöhnlich über geeignete Interrupts. Es ist genauso möglich, als Sendeschnittstelle eine gewöhnliche SWP-Schnittstelle, die auch Daten von der Steuerapplikation 152 empfangen kann, oder eine andere Schnittstelle zu verwenden.

Die entschlüsselten Daten werden schließlich von der Steuereinrichtung 152 an das Display 170 weitergeleitet, wo sie dem Benutzer als Fernsehbilder angezeigt werden. Um Echtzeitanforderungen zu erfüllen, d.h. aktuell über die Funkschnittstelle empfangene verschlüsselte Fernsehdaten direkt zur Anzeige bringen zu können, sind die Steuerapplikation 152 und die Kommunikationsapplikation 52 multithreading-fähig ausgebildet. Das heißt, die Steuerapplikation 152 kann parallel Daten von der Funkschnittstelle 180 empfangen und an die USB-Schnittstelle 21 weiterleiten sowie von der SWP-Schnittstelle 22 die entschlüsselten Daten wieder entgegennehmen und an das Display 170 weiteleiten. Die Kommunikation 52 der Chipkarte 10 kann ihrerseits parallel verschlüsselte Daten aus dem Eingangsspeicher 23 der USB-Schnittstelle entnehmen, entschlüsseln und die entschlüsselten Daten in dem Ausgangsspeicher 24 der SWP-Schnittstelle speichern. Auf diese Weise können bereits entschlüsselte Daten auf dem Display 170 angezeigt werden, während weiterhin noch verschlüsselte Daten über die Funkschnittstelle 180 empfangen werden. Die im Allgemeinen recht großen Datenmengen im Zusammenhang mit der beschriebenen Anwendung sowie die begrenzte Speicherkapazität des Eingangsspeichers 23 machen ein solches Vorgehen in der Regel ohnehin notwendig.

Gemäß einer weiteren Ausführungsform ist es möglich, dass zwei Schnittstellen, beispielsweise eine gewöhnliche USB-Schnittstelle und eine gewöhnliche SWP-Schnittstelle, gleichzeitig als Empfangsschnittsstellen dienen. Die Steuerapplikation 152 schickt dann z.B. einen Datenstrom an die USB-Schnittstelle als eine erste Empfangsschnittstelle und den Datenstrom betreffende Steuerdaten, beispielsweise MACs, Zwischenprüfsummen oder dergleichen, an die SWP-Schnittstelle als eine zweite Ernpfangsschnittstelle. Auch ein schlüsselaustauscg zum Entschlüsseln von Daten kann über die zweite Schnittstelle vorgenommen werden. Es können auch mehr als zwei Schnittstellen und auch gleichartige Schnittstellen gleichzeitig als Empfangsschnittstellen dienen. In gleicher Weise können zwei oder mehr verschiedene oder gleichartige Schnittstellen gleichzeitig als Sendeschnittstellen dienen, d.h. die Kommunikationsapplikation 52 sendet beispielsweise einen Teil der bearbeiteten Daten über die USB-Schnittstelle als eine erste Sendeschnittstelle und einen anderen Teil der bearbeiteten Daten über die SWP-Schnittstelle als eine zweite Sendeschnittstelle an die Steuerapplikation 152 des Telekommunikationsendgeräts 100.

## Patentansprüche

1. Verfahren in einem portablen Datenträger (10), umfassend die Schritte:
- Empfangen von Daten von einer Datenverarbeitungseinrichtung (100);
- Bearbeiten der empfangenen Daten; und
- Zurücksenden der bearbeiteten Daten an die Datenverarbeitungseinrichtung (100);
**dadurch gekennzeichnet, dass**
- die Daten über zumindest zwei Empfangsschnittstellen des Datenträgers (10) empfangen und/oder
- die bearbeiteten Daten über zumindest zwei Sendeschnittstellen des Datenträgers (10) zurückgesendet und/oder
- die Daten über zumindest eine Empfangsschnittstelle (21) des Datenträgers (10) empfangen und die bearbeiteten Daten über zumindest eine von der zumindest einen Empfangsschnittstelle (21) verschiedene Sendeschnittstelle (22) des Datenträgers (10) zurückgesendet werden.

2. Verfahren nach Anspruch 1, **dadurch gekennzeichnet, dass** die Daten über zumindest eine Empfangsschnittstelle (21) empfangen und gleichzeitig die bearbeiten Daten über zumindest eine Sendeschnittstelle (22) zurückgesendet werden.

3. Verfahren nach Anspruch 1 oder 2, **dadurch gekennzeichnet, dass** über eine erste Empfangsschnittstelle des Datenträgers (10) ein Datenstrom und über eine zweite Empfangsschnittstelle des Datenträgers (10) den Datenstrom betreffende Steuerdaten empfangen werden.

4. Verfahren nach einem der Ansprüche 1 bis 3, **dadurch gekennzeichnet, dass** die empfangenen Daten beim Bearbeiten verschlüsselt oder entschlüsselt werden.

5. Verfahren nach einem der Ansprüche 1 bis 4, **dadurch gekennzeichnet, dass** die Daten über eine USB-Schnittstelle (21) und/oder eine SWP-Schnittstelle (22) als Empfangsschnittstelle empfangen werden und die verarbeiteten Daten über eine USB-Schnittstelle (21) und/oder eine SWP-Schnittstelle (22) als Sendeschnittstelle zurückgesendet werden.

6. Portabler Datenträger (10), umfassend zumindest zwei Schnittstellen (21, 22) zur Datenkommunikation mit einer Datenverarbeitungseinrichtung (100) und eine Kommunikationsseinrichtung (52), die eingerichtet ist, Daten von der Datenverarbeitungseinrichtung (100) zu empfangen, die empfangenen Daten zu bearbeiten und die bearbeiteten Daten an die Datenverarbeitungseinrichtung (100) zurückzusenden, **dadurch gekennzeichnet, dass** die Kommunikationsseinrichtung (52) eingerichtet ist,
- die Daten über zumindest zwei Empfangsschnittstellen des Datenträgers (10) zu empfangen und/oder
- die bearbeiteten Daten über zumindest zwei Sendeschnittstellen des Datenträgers (10) zurückzusenden und/oder
- die Daten über zumindest eine Empfangsschnittstelle (21) des Datenträgers (10) zu empfangen und die bearbeiteten Daten über zumindest eine von der zumindest einen Empfangsschnittstelle (21) verschiedene Sendeschnittstelle (22) des Datenträgers (10) zurückzusenden.

7. Datenträger (10) nach Anspruch 6, **dadurch gekennzeichnet dass** die Kommunikationseinrichtung (52) eingerichtet ist, die Daten über zumindest eine Empfangsschnittstelle (21) von der Datenverarbeitungseinrichtung (100) zu empfangen und gleichzeitig die bearbeiteten Daten über zumindest eine Sendeschnittstelle (22) an die Datenverarbeitungseinrichtung (100) zurückzusenden.

8. Datenträger (10) nach Anspruch 6 oder 7, **dadurch gekennzeichnet, dass** die Kommunikationseinrichtung (52) eingerichtet ist, über eine erste Empfangsschnittstelle einen Datenstrom und über eine zweite Empfangsschnittstelle den Datenstrom betreffende Steuerdaten von der Datenverarbeitungseinrichtung (100) zu empfangen.

9. Datenträger (10) nach einem der Ansprüche 6 bis 8, **dadurch gekennzeichnet, dass** die Kommunikationseinrichtung (52) eingerichtet ist, die empfangenen Daten beim Bearbeiten zu verschlüsseln oder zu entschlüsseln.

10. Datenträger (10) nach einem der Ansprüche 6 bis 10, **gekennzeichnet durch** eine USB-Schnittstelle (21) als Empfangsschnittstelle und/oder Sendeschnittstelle und eine SWP-Schnittstelle (22) als Empfangsschnittstelle und/ oder Sendeschnittstelle.

11. Datenverarbeitungseinrichtung (100), umfassend eine Leseeinrichtung (120) zum Aufnehmen eines portablen Datenträgers (10) nach einem der Ansprüche 6 bis 10, die eingerichtet ist, die zumindest zwei Schnittstellen (21, 22) des Datenträgers (10) zu unterstützen, und eine Steuereinrichtung (152), die eingerichtet ist, Daten an den Datenträger (10) zu senden und die bearbeiteten Daten von dem Datenträger (10) wieder entgegenzunehmen, **dadurch gekennzeichnet, dass** die Steuereinrichtung (152) eingerichtet ist,
- die Daten über zumindest zwei Empfangsschnittstellen des Datenträgers (10) an den Datenträger (10) zu senden und/ oder
- die bearbeiteten Daten über zumindest zwei Sendeschnittstellen des Datenträgers (10) von dem Datenträger (10) wieder entgegenzunehmen und/ oder
- die Daten über zumindest eine Empfangsschnittstelle (21) des Datenträgers (10) an den Datenträger (10) zu senden und die bearbeiteten Daten über zumindest eine von der zumindest einen Empfangsschnittstelle (21) verschiedene Sendeschnittstelle (22) des Datenträgers (10) von dem Datenträger (10) wieder entgegenzunehmen.

12. Datenverarbeitungseinrichtung (100) nach Anspruch 11, **dadurch gekennzeichnet, dass** die Steuereinrichtung (152) eingerichtet ist, die Daten über zumindest eine Empfangsschnittstelle (21) des Datenträgers (10) an den Datenträger (10) zu senden und gleichzeitig von dem Datenträger (10) die bearbeiteten Daten über zumindest eine Sendeschnittstelle (22) von dem Datenträger (10) wieder entgegenzunehmen.

13. Datenverarbeitungseinrichtung (100) nach Anspruch 11 oder 12, **dadurch gekennzeichnet, dass** die Steuereinrichtung (152) eingerichtet ist, über eine erste Empfangsschnittstelle des Datenträgers (10) einen Datenstrom und über eine zweite Empfangsschnittstelle des Datenträgers (10) den Datenstrom betreffende Steuerdaten an den Datenträger (10) zu senden.

14. Datenverarbeitungseinrichtung (100) nach einem der Ansprüche 11 bis 13, **dadurch gekennzeichnet, dass** die Leseeinrichtung (120) eingerichtet ist, eine USB-Schnittstelle (21) des Datenträgers (10) als Empfangsschnittstelle und/ oder Sendeschnittstelle des Datenträgers (10) zu unterstützten und eine SWP-Schnittstelle (22) des Datenträgers (10) als Empfangsschnittstelle und/oder Sendeschnittstelle des Datenträgers (10) zu unterstützen.

15. System, umfassend eine Datenverarbeitungseinrichtung (100) nach einem der Ansprüche 11 bis 15 und einen von der Datenverarbeitungseinrichtung (100) aufgenommenen portablen Datenträger (10) nach einem der Ansprüche 6 bis 10.

## Claims

1. A method in a portable data carrier (10), comprising the steps of:
- receiving data from a data processing device (100);
- processing the received data; and
- sending back the processed data to the data processing device (100);
**characterized in that**
- the data are received via at least two receive interfaces of the data carrier (10) and/or
- the processed data are sent back via at least two transmit interfaces of the data carrier (10) and/or
- the data are received via at least one receive interface (21) of the data carrier (10), and the processed data sent back via at least one transmit interface (22) of the data carrier (10) that is different from the at least one receive interface (21).

2. The method according to claim 1, **characterized in that** the data are received via at least one receive interface (21), and the processed data simultaneously sent back via at least one transmit interface (22).

3. The method according to claim 1 or 2, **characterized in that** a data stream is received via a first receive interface of the data carrier (10), and control data relating to the data stream via a second receive interface of the data carrier (10).

4. The method according to any of claims 1 to 3, **characterized in that** the received data are encrypted or decrypted upon processing.

5. The method according to any of claims 1 to 4, **characterized in that** the data are received via a USB interface (21) and/or an SWP interface (22) as a receive interface, and the processed data are sent back via a USB interface (21) and/or an SWP interface (22) as a transmit interface.

6. A portable data carrier (10) comprising at least two interfaces (21, 22) for data communication with a data processing device (100), and a communication device (52) which is adapted to receive data from the data processing device (100), process the received data, and send back the processed data to the data processing device (100), **characterized in that** the communication device (52) is adapted to
- receive the data via at least two receive interfaces of the data carrier (10) and/or
- send back the processed data via at least two transmit interfaces of the data carrier (10) and/or
- receive the data via at least one receive interface (21) of the data carrier (10) and send back the processed data via at least one transmit interface (22) of the data carrier (10) that is different from the at least one receive interface (21).

7. The data carrier (10) according to claim 6, **characterized in that** the communication device (52) is adapted to receive the data from the data processing device (100) via at least one receive interface (21), and simultaneously send back the processed data to the data processing device (100) via at least one transmit interface (22).

8. The data carrier (10) according to claim 6 or 7, **characterized in that** the communication device (52) is adapted to receive from the data processing device (100) a data stream via a first receive interface, and control data relating to the data stream via a second receive interface.

9. The data carrier (10) according to any of claims 6 to 8, **characterized in that** the communication device (52) is adapted to encrypt or decrypt the received data upon processing.

10. The data carrier (10) according to any of claims 6 to 9, **characterized by** a USB interface (21) as a receive interface and/or transmit interface, and an SWP interface (22) as a receive interface and/or transmit interface.

11. A data processing device (100) comprising a reading device (120) for taking up a portable data carrier (10) according to any of claims 6 to 10, which is adapted to support the at least two interfaces (21, 22) of the data carrier (10), and a control device (152) which is adapted to send data to the data carrier (10) and accept the processed data from the data carrier (10) again, **characterized in that** the control device (152) is adapted to
- send the data to the data carrier (10) via at least two receive interfaces of the data carrier (10) and/or
- accept the processed data from the data carrier (10) again via at least two transmit interfaces of the data carrier (10) and/or
- send the data to the data carrier (10) via at least one receive interface (21) of the data carrier (10) and accept the processed data from the data carrier (10) again via at least one transmit interface (22) of the data carrier (10) that is different from the at least one receive interface (21).

12. The data processing device (100) according to claim 11, **characterized in that** the control device (152) is adapted to send the data to the data carrier (10) via at least one receive interface (21) of the data carrier (10) and simultaneously accept the processed data from the data carrier (10) again via at least one transmit interface (22) of the data carrier (10).

13. The data processing device (100) according to claim 11 or 12, **characterized in that** the control device (152) is adapted to send to the data carrier (10) a data stream via a first receive interface of the data carrier (10), and control data relating to the data stream via a second receive interface of the data carrier (10).

14. The data processing device (100) according to any of claims 11 to 13, **characterized in that** the reading device (120) is adapted to support a USB interface (21) of the data carrier (10) as a receive interface and/or transmit interface of the data carrier (10), and support an SWP interface (22) of the data carrier (10) as a receive interface and/or transmit interface of the data carrier (10).

15. A system comprising a data processing device (100) according to any of claims 11 to 14 and a portable data carrier (10) according to any of claims 6 to 10 taken up by the data processing device (100).

## Revendications

1. Procédé dans un support de données (10) portable, comprenant les étapes :
- réception de données de la part d'un dispositif de traitement des données (100);
- traitement des données reçues; et
- renvoi des données traitées au dispositif de traitement des données (100);
**caractérisé en ce que**
- les données sont reçues par l'intermédiaire d'au moins deux interfaces de réception du support de données (10) et/ou
- les données traitées sont renvoyées par l'intermédiaire d'au moins deux interfaces d'envoi du support de données (10) et/ou
- les données sont reçues par l'intermédiaire d'au moins une interface de réception (21) du support de données (10) et les données traitées sont renvoyées par l'intermédiaire d'au moins une interface d'envoi (22) du support de données (10) différente de la au moins une interface de réception (21).

2. Procédé selon la revendication 1, **caractérisé en ce que** les données sont reçues par l'intermédiaire d'au moins une interface de réception (21) et que, en même temps, les données traitées sont renvoyées par l'intermédiaire d'au moins une interface d'envoi (22).

3. Procédé selon la revendication 1 ou 2, **caractérisé en ce qu'**un train de données est reçu par l'intermédiaire d'une première interface de réception du support de données (10) et des données de commande concernant le train de données sont reçues par l'intermédiaire d'une seconde interface de réception du support de données (10).

4. Procédé selon une des revendications de 1 à 3, **caractérisé en ce que** les données reçues sont chiffrées ou déchiffrées lors du traitement.

5. Procédé selon une des revendications de 1 à 4, **caractérisé en ce que** les données sont reçues par l'intermédiaire d'une interface USB (21) et/ou d'une interface SWP (22) en tant qu'interface de réception et que les données traitées sont renvoyées par l'intermédiaire d'une interface USB (21) et/ou d'une interface SWP (22) en tant qu'interface d'envoi.

6. Support de données (10) portable, comprenant au moins deux interfaces (21, 22) pour la communication de données avec un dispositif de traitement des données (100) et un dispositif de communication (52) qui est configuré pour recevoir des données de la part du dispositif de traitement des données (100), traiter les données reçues et renvoyer les données traitées au dispositif de traitement des données (100), **caractérisé en ce que** le dispositif de communication (52) est configuré pour
- recevoir les données par l'intermédiaire d'au moins deux interfaces de réception du support de données (10) et/ou
- renvoyer les données traitées par l'intermédiaire d'au moins deux interfaces d'envoi du support de données (10) et/ou
- recevoir les données par l'intermédiaire d'au moins une interface de réception (21) du support de données (10) et renvoyer les données traitées par l'intermédiaire d'au moins une interface d'envoi (22) du support de données (10) différente de la au moins une interface de réception (21).

7. Support de données (10) selon la revendication 6, **caractérisé en ce que** le dispositif de communication (52) est configuré pour recevoir les données de la part du dispositif de traitement des données (100) par l'intermédiaire d'au moins une interface de réception (21) et pour renvoyer en même temps les données traitées au dispositif de traitement des données (100) par l'intermédiaire d'au moins une interface d'envoi (22).

8. Support de données (10) selon la revendication 6 ou 7, **caractérisé en ce que** le dispositif de communication (52) est configuré pour recevoir de la part du dispositif de traitement des données (100) un train de données par l'intermédiaire d'une première interface de réception et des données de commande concernant le train de données par l'intermédiaire d'une seconde interface de réception.

9. Support de données (10) selon une des revendications de 6 à 8, **caractérisé en ce que** le dispositif de communication (52) est configuré pour chiffrer ou pour déchiffrer lors du traitement les données reçues.

10. Support de données (10) selon une des revendications de 6 à 9, **caractérisé par** une interface USB (21) en tant qu'interface de réception et/ou interface d'envoi et une interface SWP (22) en tant qu'interface de réception et/ou interface d'envoi.

11. Dispositif de traitement des données (100), comprenant un dispositif de lecture (120) destiné à héberger un support de données (10) portable selon une des revendications de 6 à 10, qui est configuré pour assister les au moins deux interfaces (21, 22) du support de données (10), et un dispositif de commande (152) qui est configuré pour envoyer des données au support de données (10) et pour accepter à nouveau de la part du support de données (10) les données traitées, **caractérisé en ce que** le dispositif de commande (152) est configuré pour
- envoyer au support de données (10) les données par l'intermédiaire d'au moins deux interfaces de réception du support de données (10) et/ou
- accepter à nouveau de la part du support de données (10), par l'intermédiaire d'au moins deux interfaces d'envoi du support de données (10), les données traitées et/ou
- envoyer au support de données (10) les données par l'intermédiaire d'au moins une interface de réception (21) du support de données (10) et accepter à nouveau de la part du support de données (10), par l'intermédiaire d'au moins une interface d'envoi (22) du support de données (10) différente de la au moins une interface de réception (21), les données traitées.

12. Dispositif de traitement des données (100) selon la revendication 11, **caractérisé en ce que** le dispositif de commande (152) est configuré pour envoyer les données au support de données (10) par l'intermédiaire d'au moins une interface de réception (21) du support de données (10) et accepter à nouveau en même temps de la part du support de données (10), par l'intermédiaire d'au moins une interface d'envoi (22) du support de données (10), les données traitées.

13. Dispositif de traitement des données (100) selon la revendication 11 ou 12, **caractérisé en ce que** le dispositif de commande (152) est configuré pour envoyer au support de données (10) un train de données par l'intermédiaire d'une première interface de réception du support de données (10) et des données de commande concernant le train de données par l'intermédiaire d'une seconde interface de réception du support de données (10).

14. Dispositif de traitement des données (100) selon une des revendications de 11 à 13, **caractérisé en ce que** le dispositif de lecture (120) est configuré pour assister en tant qu'interface de réception et/ou interface d'envoi du support de données (10) une interface USB (21) du support de données (10) et pour assister en tant qu'interface de réception et/ou interface d'envoi du support de données (10) une interface SWP (22) du support de données (10).

15. Système, comprenant un dispositif de traitement des données (100) selon une des revendications de 11 à 14 et un support de données (10) portable selon une des revendications de 6 à 10 hébergé par le dispositif de traitement des données (100).
